Europäisches Patentamt

European Patent Office

Office européen des brevets

(11) Publication number: **0 125 754**
**B1**

(12) **EUROPEAN PATENT SPECIFICATION**

(45) Date of publication of patent specification: **14.06.89**

(51) Int. Cl.⁴: **E 02 B 3/22**

(21) Application number: **84301587.6**

(22) Date of filing: **09.03.84**

(54) Marine fender.

(30) Priority: **12.05.83 JP 81761/83**

(43) Date of publication of application:
**21.11.84 Bulletin 84/47**

(45) Publication of the grant of the patent:
**14.06.89 Bulletin 89/24**

(84) Designated Contracting States:
**BE DE GB NL**

(56) References cited:
**DE-A-1 955 634**
**FR-A-2 068 881**
**FR-A-2 274 737**
**GB-A-1 120 308**
**JP-A-49 006 352**

(73) Proprietor: BRIDGESTONE TIRE COMPANY
LIMITED
10-1, Kyobashi 1-Chome Chuo-Ku
Tokyo (JP)

(72) Inventor: Kajigaya, Shinichi
7-26, Konan 1-Chome Konan-Ku
Yokohama City Kanagawa Pref. (JP)

(74) Representative: Whalley, Kevin et al
MARKS & CLERK 57/60 Lincoln's Inn Fields
London WC2A 3LS (GB)

## Description

This invention relates to a marine fender, which is use attached to a berthing surface of a waterway port structure such as a quay, pier, dolphin or the like so as to usually extend in the horizontal or vertical direction thereof for absorbing the berthing energy of a vessel.

Conventional marine fenders have been disclosed, for instance, in Japanese Patent Application Publication No. 49-6,352. As shown in Fig. 1 of the accompanying drawings, which is a sectional view of one embodiment of a conventional marine fender, the conventional marine fender is so constituted that a hollow cylindrical main body 5 having a trapezoidal profile in section is formed by joining a fitting portion 2 and a shock-receiving portion 3, which are parallel to a quay wall 1, to each other through a pair of shock-supporting portions 4, a plate member 6 is embedded in the shock-receiving portion 3 of the main body 5, and a shock-receiving member 8 is brought into contact with a shock-receiving surface 7 of the shock-receiving portion 3 and connected together with the plate member 6 to the shock-receiving portion 3 by means of a plurality of connection members 9 passing through the shock-receiving portion 3, wherein the width of the shock-receiving member 8 is substantially equal to or smaller than that of the shock-receiving portion 3.

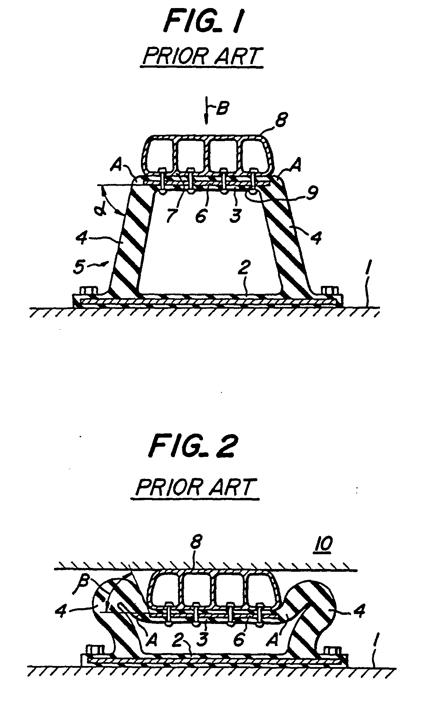

As shown in Fig. 2 of the accompying drawings, which is a sectional view of the marine fender shown in Fig. 1 in the deformation state thereof, when a broadside 10 of a vessel impacts the shock-receiving member 8, the absorption of the berthing energy by such a marine fender is performed mainly by such an elastic deformation of the shock-supporting portions 4 that the shock-receiving member 8 effectively enters between the shock-supporting portions 4.

According to this conventional technique, however, the shock-receiving portion 3 of the main body 5 cannot be elastically deformed in any direction when the berthing load is applied to the shock-receiving member 8, because the plate member 6 and the shock-receiving member 8 are connected to each other at the shock-receiving portion 3. On the other hand, the joint portions A between the shock-receiving portion 3 and the shock-supporting portions 4 should be elastically deformed to a large extent due to the fact that the shock-receiving member 8 enters between the shock-supporting portions 4 when the berthing load is applied to the shock-receiving member 8. In other words, each of the joint portions A is required to be deformed largely so as to allow the elastic deformatin of the shock-supporting portions 4 in such an amount that the absolute values of the angles $\alpha,\beta$ defined between the plate member 6 and the shock-supporting portion 4 near the shock-receiving portion 3 before and after the deformation may be substantially equal to each other as shown in Figs. 1 and 2. Consequently, stress concentration is caused in the main body 5 at the boundary between the portion causing no deformation and the portion causing much deformation as mentioned above (in the illustrated embodiment, at each side edge portion of the plate member 6), so that the main body 5 is liable to be broken at the stress-concentrated portion at a relatively earlier stage through repeated use of the marine fender.

In addition, since the above conventional technique is concerned only with the case where the berthing load is applied to the surface of the shock-receiving member 8 in a direction perpendicular thereto as shown by an arrow B in Fig. 1, when the berthing load has a component parallel to the surface of the shock-receiving member, such a loading component can not be effectively absorbed, and in the worst case the main body 5 is pushed down.

It is, therefore, an aim of the present invention to provide a marine fender which advantageously overcomes the above drawbacks of the prior art.

The present invention provides a marine fender comprising an elgonate main body of a rubber or rubbery elastic material comprising, in sectional view, a shock-receiving portion, a pair of shock-supporting portions diverging from the side edge portions of the shock-receiving portion and a pair of fitting portions provided at the edge portions of the shock-supporting portions, a reinforcing member embedded into or attached to the shock-receiving portion, and a rigid shock-receiving member connected to the reinforcing member, wherein a rigid skirt portion integral with the shock-receiving member is disposed at both side edges of the shock-receiving member and extend toward the shock-supporting portions axially along the side edge surfaces of the shock-receiving portion beyond the reinforcing member.

According to the marine fender of the invention, a shock-receiving member having a high rigidty is connected to a reinforcing member, which is suitably made from a metal or a synthetic resin and attached to a surface of a shock-receiving portion of the fender main body or embedded in the shock-receiving portion, and each skirt portion provided at each side edge of the shock-receiving member extends toward the shock-supporting portion along each side surface of the shock-receiving portion over the reinforcing member. Therefore, in the absorption of the berthing energy, the deformation of the shock-receiving portion is restrained by means of the skirt portion of the shock-receiving member, whereby gradual elastic deformation is made possible at an area from the shock-receiving portion to the shock-supporting portion to effectively prevent stress concentration of the main body.

Furthermore, since the skirt portion extends along each side surface of the shock-receiving portion, even if a load component parallel to the surface of the shock-receiving member is applied, it is effectively borne through the contact between the skirt portion and the side surface of the shock-receiving portion to allow more absorption of such a parallel loading component as compared with the prior art.

The invention will be further described, by way of example only, with reference to the accompanying drawings, wherein:

Fig. 3 is a sectional view of one embodiment of a marine fender according to the invention:

Fig. 4 is a sectional view illustrating the deformation state of the marine fender of Fig. 3; and

Figs. 5-8 are sectional views of further embodiments of marine fenders according to the invention.

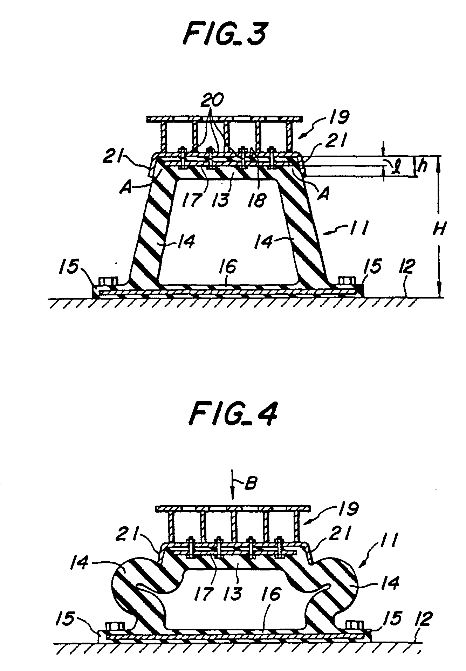

The marine fender shown in Fig. 3 comprises a hollow cylindrical main body 11 made of rubber or rubbery elastic material, comprising a shock-receiving portion 13 extending parallel to a quay wall 12, a pair of shock-supporting portions 14 gradually diverging from both side edge portions of the shock-receiving portion 13 toward the quay wall 12, and a pair of fitting portions 15 each provided at the edge portion of the respective shock-supporting portion 14 for attachment to the quay wall 12. In the illustrated embodiment, the main body 11 is provided with a bottom portion 16 connecting both shock-supporting portions 14 to each other along the surface of the quay wall 12 for increasing the strength of the main body 11.

A hard reinforcing member 17 made for example from a metal plate or a synthetic resin plate is embedded in the shock-receiving portion 13. To the reinforcing member 17 is connected a shock-receiving member 19 of a rigid structure, which is arranged in contact with a shock-receiving surface 18 of the shock-receiving portion 13, by means of a plurality of connection members 20 such as bolts. The shock-receiving member 19 is provided at its side facing the quay wall with a pair of integral rigid skirt portions 21, each of which protrudes from the side edge of the shock-receiving member 19 toward the quay wall and extends along the side surface of the shock-receiving portion 13 beyond the reinforcing member 17 toward the shock-supporting portion. As shown in Fig. 3, the skirt portion 21 is brought into contact with the corresponding side surface of the shock-receiving portion 13 even before the deformation of the main body 11, but the skirt portion may be positioned slightly apart from the corresponding side surface of the shock-receiving portion 13 provided the restraint action of the elastic deformation can be obtained as mentioned later.

The main fender of the above construction generally extends in a horizontal or vertical direction to the quay wall 12, while the fitting portions 15 are secured to the quay wall 12 by means of the bolts as shown in Figs. 3 and 4.

When a berthing load is applied to the marine fender from a direction perpendicular to the surface of the shock-receiving member 19, the marine fender is elastically deformed as shown in Fig. 4 to fully absorb the berthing energy. In this case, since the shock-receiving portion 13 of the main body 11 hardly deforms due to the fact that it is restrained by the reinforcing member 17 and the shock-receiving member 19 connected thereto, the absorption of the berthing energy is mainly performed by the shock-supporting portions 14 which deform outwardly to a large extent.

Having regard to the deformation behaviour of the boundary between the portion causing substantially no deformation and the portion causing large deformation, i.e. the joint portion A between the shock-receiving portion 13 and the shock-supporting portion 14 at the time of the energy absorption-deformation in the main body 11, it is possible for the conventional marine fender to possess a great latitude in an area extending from the edge portion of the reinforcing member 6 to the shock-supporting portion 4 which is less restrainted by the reinforcing member 6 and the shock-receiving member 8, while in the marine fender shown in Figs. 3 and 4 the outward deformation of the shock-receiving portion 13 is completely restrained by the skirt portion 21 and also the deformation of the shock-receiving portion 13 toward the direction of the shock-supporting portion 14 is restrained by the frictional force between the skirt portion 21 and the side surface of the shock-receiving portion 13, so that the joint A is not subjected to rapid and large elastic deformation. That is, the deformation amount of the joint portion A is gradually larger as it becomes away from the reinforcing member 17 and the shock-receiving member 19 while being influenced by the skirt portion 21.

For this reason, there is no danger that stress concentration resulting from large deformation of the joint portions A occurs in each side edge portion of the reinforcing member 17 as in the conventional marine fender, so that the durability of the main body 11 can be notably improved.

In order to effectively protect the side surface of the shock-supporting portion 14 when contacted by the end of the skirt portion 21 by elastic deformation as shown in Fig. 4, it is preferable to make the surface area of the end surface of the skirt portion larger or to a dispose a cushioning member in the contact portion.

As regards the energy absorption performance of such a maine fender, it has been confirmed that the energy absorption performance hardly lowers when the marine satisfies the following relationship:

$$1 < h \leqq 0.3H$$

wherein H is the height of the main body 11, h is the vertical height of the skirt portion 21 and 1 is the distance from the shock-receiving surface 18 to the surface of the reinforcing member 17 facing the shock-supporting portion.

When a loading component parallel to the surface of the shock-receiving member 19 is applied to the marine fender, the skirt portion 21 is brought into contact with the side surface of the shock-receiving portion to receive a reaction force from the contact area and the vicinity thereof, so that the loading component is effectively born by the skirt portion. Further, even upon deformation of the shock-supporting portions 14, the berthing load is transferred from the skirt portion 21 to the main body 11, so that it is possible to absorb a larger amount of the berthing load as compared with the conventional marine fender.

Although the reinforcing member 17 is embedded in the shock-receiving portion 13 in the illustrated embodiment, it may be adhered to the shock-receiving surface 18. Further, the shock-receiving member 19 may be secured apart from the shock-receiving surface 18.

In Figs. 5-8 are various modified embodiments of the marine fender according to the invention.

In the embodiment of Fig. 5, the shock-receiving member 19 provided with a pair of skirt portions 21 contacting the side surfaces of the shock-receiving portion 13 is fitted to the main body 11 in which the width of the shock-receiving portion 13 is made uniform and the thickness of each of shock-supporting portions 14 is made gradually thicker toward the fitting portion 15 without the provision of a bottom portion 16.

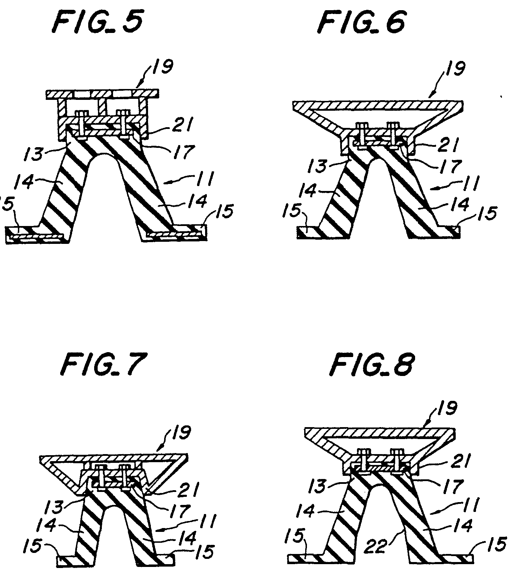

Fig. 6 shows a modified embodiment of Fig. 5 in which a shock-receiving member 19 having a large berthing surface area is attached to the main body 11.

In the embodiment of Fig. 7, a shock-receiving member 19 having a large berthing surface area is attached to the main body 11 having substantially the same structure as shown in Fig. 3 with a uniform thickness of the shock-receiving portion 14 and without the provision of a bottom portion 16.

Further, Fig. 8 shows a modified embodiment of Fig. 6 in which bend portions 22 are formed in the inner surfaces of the shock-receiving portions 14 at substantially the middle position thereof, respectively.

In these embodiments of Figs. 5-8, the deformation of the main body 11 during the absorption of the berthing energy is performed in the same manner as described in connection with the embodiment of Fig. 3 because of the presence of the skirt portion 21, so that not only is the durability of the main body 11 remarkably improved, but also a loading component parallel to the surface of the shock-receiving surface can be borne and absorbed effectively. Moreover, according to the embodiments of Figs. 6-8, since the berthing surface area of the shock-receiving member 19 is large, the force per unit area acting to the broadside at the time of berthing can be reduced to protect the broadside. Further, the embodiment of Fig. 7 has the advantage that the contact area between the end surface of the skirt portion and the shock-supporting portion 14 can be made wider upon deformation of the marine fender. In addition, according to the embodiment of Fig. 8, the bending of the shock-supporting portion 14 can effectively be guided at the time of berthing.

As apparent from the above, according to the invention, each skirt portion of the shock-receiving member connected to the reinforcing member extends along each side surface of the shock-receiving portion beyond the reinforcing member toward the shock-supporting portion to restrain the deformation of the joint portions between the shock-receiving portion and the shock-supporting portion, wherby the stress concentration to the main body can advantageously be removed to fully enhance the durability of the main body, and also a loading component parallel to the surface of the shock-receiving surface can be borne and absorbed effectively.

## Claims

1. A marine fender comprising an elongate main body (11) of a rubber or rubbery elastic material comprising, in sectional view, a shock-receiving portions (13), a pair of shock-supporting portions (14) diverging from the side edge portions of the shock-receiving portion (13) and a pair of fitting portions (15) provided at the edge portions of the shock-supporting portions (14), a reinforcing member (17) embedded into or attached to the shock-receiving portion (13), and a rigid shock-receiving member (19) connected to the reinforcing member (17), characterized in that a rigid skirt portion (21) integral with the shock-receiving member (19) is disposed at both side edes of the shock-receiving member (19) and extend toward the shock-supporting portions (14) axially along the side edge surfaces to the shock-receiving portion (13) beyond the refinforcing member (17).

2. A marine fender as claimed in claim 1, characterised by the following relationship:

$$1 < h \leqq 0.3H$$

in which H is the height of the main body (11), h is the vertical height of the skirt portion (21), and 1 is the distance between the shock-receiving surface (18) of the shock-receiving portion (13) and the surface of the reinforcing member (17) facing the shock-supporting portion (14).

## Patentansprüche

1. Schiffsfender, mit einem Hauptteil (11) von überwiegender Längserstreckung aus Gummi oder einem gummielastischen Werkstoff mit, in Querschnittsansicht, einem stoßaufnehmenden Abschnitt (13), einem Paar von den Seitenrandabschnitten des stoßaufnehmenden Abschnitts (13) konisch nach außen verlaufenden stoßaufnehmenden Abschnitten (14), und einem Paar Anschlußabschnitten (15) an den Randabschnitten der stoßaufnehmenden Abschnitte (14), einem in den stoßaufnehmenden Abschnitt (13) eingebetteten oder an ihm befestigten Verstärkungsteil (17), und einem mit dem Verstärkungsteil (17) verbundenen starren stoßaufnehmenden Bauteil (19), dadurch gekennzeichnet, daß eine mit dem stoßaufnehmenden Bauteil (19) fest bzw. einstückig verbundene starre Schürze (21) an beiden Seitenrändern des stoßaufnehmenden Bauteils (19) angeordnet ist und sich entlang den Seitenrandflächen des stoßaufnehmenden Abschnitts (13) axial über das Verstärkungsteil (17) hinaus in Richtung auf die stoßaufnehmenden Abschnitte (14) erstreckt.

2. Schiffsfender nach Anspruch 1, gekennzeichnet durch die nachstehand angegebene Beziehung:

$$1 < h \leqq 0.3H$$

worin H die Höhe des Hauptteils (11) ist, h die senkrechte Höhe der Schürze (21), und 1 der Abstand zwischen der stoßaufnehmenden Fläche (18) des stoßaufnehmenden Abschnitts (13) und der dem stoßaufnehmenden Abschnitt (14) zugewandten Fläche des Verstärkungsteils (17).

**Revendications**

1. Amortisseur d'accostage marin comprenant un corps principal allongé (11) en coautchouc ou en une matière élastique caoutchouteuse comprenant, en coupe transversale, une partie de réception de chocs (13), une paire de parties de support de chocs (14) s'écartant des parties de bord latérales de la partie de réception de chocs (13) et une paire de parties d'ajustage (15) prévues aux parties de bord des parties de support de chocs (14), un organe de renforcement (17) incorporé dans ou fixé à la partie de réception de chocs (13) ainsi qu'un organe de réception de chocs rigide (19) relié à l'organe de renforcement (17), caractérisé en ce qu'une partie de jupe rigide (21) solidaire de l'organe de réception de chocs (19) est agencée aux deux bords latéraux de l'organe de réception de chocs (19) et se prolonge vers les parties de support de chocs (14) axialement de long des surfaces de bord latérales de la partie de réception de chocs (13) au-delà de l'organe de renforcement (17).

2. Amortisseur d'accostage marin suivant la revendication 1, caractérisé par la relation suivante:

$$1 < h \leqq 0.3H$$

dans laquelle H représente la hauteur du corps principal (11), h représente la hauteur verticale de la partie de jupe (21) et 1 représente la distance entre la surface de réception de chocs (18) de la partie de réception de chocs (13) et la surface de l'organe de renforcement (17) en regard de la partie de support de chocs (14).

# FIG. 1

## PRIOR ART

# FIG. 2

## PRIOR ART

## FIG_3

## FIG_4

## FIG_5

## FIG_6

## FIG_7

## FIG_8